# EUROPÄISCHE PATENTSCHRIFT

(11) **EP 2 711 793 B1**
(45) Veröffentlichungstag und Bekanntmachung des Hinweises auf die Patenterteilung: **31.10.2018**
(21) Anmeldenummer: 12185066.3
(22) Anmeldetag: 19.09.2012
(51) Int. Cl.: G05B 19/12, G06F 8/30, G06F 8/65, G06F 8/71, G06F 8/20, G05B 19/042

(54) **Verfahren zum Betreiben eines Bediengeräts zur Steuerung einer technischen Anlage**
Method for operating an operating device for controlling a technical installation
Procédé de fonctionnement d'un appareil de commande pour commander une installation technique

(43) Veröffentlichungstag der Anmeldung: 26.03.2014
(73) Patentinhaber: Siemens Aktiengesellschaft, 80333 München (DE)
(72) Erfinder: Konradi, Philipp, 80335 München (DE); Nitzsche, Stefan, 67227 Frankenthal (DE); Strobel, Holger, 90556 Steinbach (DE)

(56) Entgegenhaltungen:
- WO-A2-2007/109717

## Beschreibung

Die Erfindung betrifft ein Verfahren zum Betreiben eines ersten oder eines zweiten Bediengeräts, welches insbesondere zur Steuerung einer technischen Anlage dient. Der Betrieb des ersten oder des zweiten Bediengeräts erfolgt mit auf einem Datenträger in einem vorgegebenen Format gespeicherten Steuerdaten.

Die teilweise auch mobil ausgebildeten Bediengeräte stellen eine Mensch-Maschine-Schnittstelle (Human Machine Interface, HMI) zur Steuerung einer technischen Anlage dar. Über die Bediengeräte kann ein Steuerrechner der technischen Anlage gesteuert werden. Hierzu verfügen die Bediengeräte über entsprechende Ein- und Ausgabemittel, über die die technische Anlage beobachtet, bedient und gesteuert werden kann.

Die Funktionalität des Bediengeräts wird mit auf einem Datenträger gespeicherten Steuerdaten sichergestellt. Bei einem technischen Defekt des Bediengeräts kann dann der Datenträger mit den Steuerdaten aus dem defekten Bediengerät entnommen werden und in ein anderes Bediengerät eingeführt werden. Nach dem Auslesen der Steuerdaten von dem Datenträger ist es möglich, die technische Anlage mit dem neuen Bediengerät zu steuern.

Obwohl das Vorhalten der Steuerdaten auf dem Datenträger den schnellen Wechsel des Bediengeräts erlaubt, kann das Auslesen und Verarbeiten der auf dem Datenträger enthaltenen Steuerdaten bei unterschiedlichen Versionen der Bediengeräte problematisch sein. Neuere Versionen, insbesondere der Software, der Bediengeräte enthalten häufig neue Funktionsmerkmale (sog. Features) oder Änderungen an den bestehenden Funktionsmerkmalen. Beides wirkt sich häufig auf die Verarbeitung der Steuerdaten aus, beispielsweise durch ein geändertes Datenformat.

Auch wenn das Bediengerät mit einer aktuelleren (Software-) Version die auf dem Datenträger gespeicherten Steuerdaten auslesen und verarbeiten kann, so kann während des Betriebs des neueren Bediengeräts eine Modifikation der auf dem Datenträger befindlichen Steuerdaten erfolgen. Nach einem Rück-tausch des Datenträgers in ein Bediengerät der alten Version, ist dann unter Umständen ein problemloses Auslesen der Steuerdaten nicht mehr möglich.

Prinzipiell ist es hierzu bekannt, Bediengeräte mit neuerer Version, d.h. neuerer Software, derart auszugestalten, dass diese die in dem "alten Format" auf dem Datenträger vorliegenden Steuerdaten verarbeiten. Das alte Format der Steuerdaten wird hierbei sowohl beim Lesen als auch beim Schreiben von Daten gewahrt. Diese erstgenannte Variante führt neben einer höheren Komplexität der Software des neueren Bediengeräts zu einer Verschlechterung der qualitativen Eigenschaften während des Betriebs des neuen Bediengeräts. Beispielsweise sind eine längere Anlaufzeit, eine länger benötigte Zeit für die Ausführung von Operationen und ein höherer Ressourcenverbrauch gegeben. Je stärker sich das neue Datenformat von dem alten Datenformat unterscheidet, umso größer fallen die negativen Auswirkungen aus.

Alternativ können die auf dem Datenträger enthaltenen Steuerdaten auf die neuere Softwareversion des aktuelleren Bediengeräts angepasst werden. Das neuere Bediengerät konvertiert hierzu die Steuerdaten in ein für dieses optimales Datenformat. Gleichzeitig muss ein Bediengerät mit älterer Version, d.h. älterer Software, um die Möglichkeit erweitert werden, die im neuen Datenformat auf dem Datenträger vorliegenden Steuerdaten zu verarbeiten. Diese Variante erfordert eine Erweiterung der Software des alten Bediengeräts. Werden die Bediengeräte in sicherheitsgerichteten Anlagen eingesetzt, so ist jede Erweiterung der Funktionalität durch einen Gutachter zu verifizieren. Dies ist aufwändig und mit hohen Kosten verbunden. Darüber hinaus kann die Interaktion des ersten Bediengeräts mit solchen Bediengeräten, welche kompatibel mit den ersten Bediengeräten sind, unter Umständen nicht mehr gewährleistet werden.

Es ist daher Aufgabe der vorliegenden Erfindung, ein Verfahren anzugeben, mit dem ein Austausch von Steuerdaten zwischen Bediengeräte mit unterschiedlichen Softwarestand auf einfachere Weise sichergestellt werden kann.

Diese Aufgabe wird gelöst durch ein Verfahren gemäß den Merkmalen des Patentanspruches 1. Vorteilhafte Ausgestaltungen ergeben sich aus den abhängigen Patentansprüchen.

Die Erfindung schlägt ein Verfahren zum Betreiben eines ersten oder eines zweiten Bediengeräts, welches insbesondere zur Steuerung einer technischen Anlage dient, mit auf einem Datenträger in einem vorgegebenen Format gespeicherten Steuerdaten vor. Die Steuerdaten sind auf dem Datenträger in einem ersten Format gespeichert, so dass diese durch das erste Bediengerät unmittelbar lesend und/oder schreibend verarbeitbar sind. Unter einer unmittelbaren Verarbeitung von Daten wird eine Verarbeitung ohne weiteren Zwischenschritt, wie z.B. eine Konvertierung und dergleichen, verstanden. Die in dem ersten Format auf dem Datenträger gespeicherten Steuerdaten können beispielsweise Daten in einem "alten Format" sein, welche durch ein erstes Bediengerät "alter Bauart" oder mit einem "alten Softwarestand" verarbeitet werden können.

Die Steuerdaten umfassen erste und zweite Steuerdaten. Beim Betrieb des zweiten Bediengeräts werden die ersten Steuerdaten in ein zweites Format gewandelt, so dass die gewandelten ersten Steuerdaten durch das zweite Bediengerät unmittelbar lesend und/oder schreibend verarbeitbar sind. Demgegenüber werden die zweiten Steuerdaten bei jedem Zugriff zur Laufzeit von dem ersten Format in ein durch das zweite Bediengerät verarbeitbares Format, oder umgekehrt, gewandelt.

Die in das zweite Format gewandelten ersten Steuerdaten werden auf dem Datenträger gespeichert. Dabei werden die in das zweite Format gewandelten ersten Steuerdaten zusätzlich zu dem im ersten Format auf dem Datenträger gespeicherten ersten Steuerdaten gespeichert. Hierdurch ist es möglich, den Datenträger mit den Steuerdaten wahlweise in dem ersten oder dem zweiten Bediengerät einzusetzen.

Das vorgeschlagene Verfahren stellt eine Kombination aus dem "Wahren eines alten Formats" und dem "Konvertieren in ein neues Format" dar. Dies ermöglicht beispielsweise die Verwendung neuerer Bediengeräte als Ersatz und den anschließenden problemlosen Rück-Tausch des Datenträgers in ältere Bediengeräte. Gleichzeitig werden die oben beschriebenen Nachteile bei der Performance und beim schnellen Anlauf der Bediengeräte vermieden. Hierdurch ergibt sich eine deutlich vereinfachte Logistik für den Anlagenbetreiber, gerade für als Ersatzgeräte vorgehaltene Bediengeräte. Somit muss beispielsweise nicht mehr genau die zu der technischen Anlage passende Version eines Bediengeräts vorgehalten werden.

Darüber hinaus ist die Form der Kollaboration mit anderen Komponenten, bei denen auf dem Datenträger gespeicherte Steuerdaten direkt ausgetauscht werden, möglich. Ein solcher Austausch kann beispielsweise durch einen Transfer über externe Datenträger, Transfer über Netzwerk, mit einem im Netzwerk freigegebenen Ordner oder einen Zugriff auf Dateien über einen Netzserver erfolgen.

Die Wandlung der ersten Steuerdaten in das zweite Format erfolgt einmalig. Hierdurch kann der Rechenaufwand für die Wandlung klein gehalten werden.

Die in das zweite Format gewandelten ersten Steuerdaten können in einer anderen Datei oder einen anderen Ordner oder einen anderen Speicherbereich als die in dem ersten Format vorliegenden Steuerdaten gespeichert werden. Hierdurch bleiben die in dem ersten Format vorliegenden Steuerdaten unbeeinflusst von der Wandlung der ersten Steuerdaten in das zweite Format. Hierdurch wird sichergestellt, dass nach einer Verwendung des Datenträgers, der nun neben den ersten Steuerdaten im ersten Format auch die ersten Steuerdaten im zweiten Format umfasst, ein erstes Bediengerät den Datenträger weiterhin problemlos auslesen bzw. beschreiben kann. Hierdurch wird die Rückwärtskompatibilität von dem zweiten zu dem ersten Bediengerät sichergestellt.

In einer weiteren Ausgestaltung werden die ersten Steuerdaten durch das zweite Bediengerät gewandelt. Dies kann beispielsweise unmittelbar nach dem ersten Lesen der auf dem Datenträger enthaltenen Steuerdaten durch das zweite Bediengerät erfolgen. Ebenso kann die Wandlung unmittelbar nach dem Einlegen des Datenträgers in ein Lesegerät des zweiten Bediengeräts erfolgen. Da, wie beschrieben, die Wandlung lediglich einmalig erfolgt, kann im Weiteren unmittelbar mit den auf dem Datenträger enthaltenen Steuerdaten gearbeitet werden.

Die ersten und die zweiten Steuerdaten sind vorzugsweise unterschiedlichen Typs. Vorzugsweise umfassen die ersten Steuerdaten solche Daten, auf welche im Betrieb des ersten und des zweiten Bediengeräts überwiegend lesend zugegriffen wird. Als überwiegend lesender Zugriff kann beispielsweise ein lesender Zugriff von mehr als 80 % des Gesamtzugriffs auf die Daten verstanden werden. Dies bedeutet, die Daten werden dann zu mehr als 80 % gelesen und zu weniger als 20 % durch Schreiben verändert.

Demgegenüber umfassen die zweiten Steuerdaten sich im Betrieb des ersten oder zweiten Steuergeräts dynamisch veränderliche Daten. Dynamisch sind die Daten im Sinne der Erfindung dann, wenn ständige oder häufige Änderungen während eines Regelbetriebs des Bediengeräts erfolgen und z.B. mehr als die Hälfte des auf die Daten erfolgenden Zugriffs schreibender Natur ist.

Gemäß einer weiteren Ausgestaltung umfasst ein Schreibzugriff auf die ersten Steuerdaten ein Schreiben der in dem ersten und zweiten Format vorliegenden ersten Steuerdaten. Die im zweiten Format vorliegenden ersten Steuerdaten werden direkt geschrieben. Die in dem ersten Format vorliegenden ersten Steuerdaten werden nach der Durchführung einer Konversion von dem durch das zweite Bediengerät verarbeitbaren Format in das erste Format geschrieben. Hierdurch ist sichergestellt, dass bei einem Schreibzugriff auf die ersten Steuerdaten die Änderungen sowohl in dem ersten als auch in dem zweiten Datenformat vorliegen. Hierdurch ist sichergestellt, dass auch bei einer Modifikation der ersten Steuerdaten durch das zweite Bediengerät die Verwendung des Datenträgers mit den darauf befindlichen Steuerdaten durch das erste Bediengerät weiter möglich ist und dieses mit aktuellen Daten arbeiten kann.

Die Erfindung wird nachfolgend näher anhand eines Ausführungsbeispiels in der Zeichnung erläutert. Es zeigen:
- Fig. 1: eine schematische Darstellung eines Datenträgers mit in einem vorgegebenen Format gespeicherten Steuerdaten, welcher zum Betreiben eines ersten oder eines zweiten Bediengeräts verwendbar ist,
- Fig. 2: den Datenträger mit den darauf gespeicherten Steuerdaten nach der Verwendung in dem zweiten Bediengerät,
- Fig. 3: eine schematische Darstellung des Verarbeitens der Steuerdaten durch das zweite Bediengerät,
- Fig. 4: eine beispielhafte Datenstruktur von ersten Steuerdaten in einem ersten Format, das durch das erste Bediengerät verarbeitbar ist,
- Fig. 5: ein Ausführungsbeispiel der Dateninhalte der ersten und zweiten Steuerdaten im ersten Format,
- Fig. 6: eine beispielhafte Datenstruktur von ersten Steuerdaten in einem zweiten Format, das durch das zweite Bediengerät verarbeitbar ist, und
- Fig. 7: ein Ausführungsbeispiel der Dateninhalte der ersten Steuerdaten im ersten und zweiten Format und von zweiten Steuerdaten im ersten Format.

Wenn in dieser Beschreibung von einem ersten oder einem zweiten Bediengerät die Rede ist, so ist dies als ein Bediengerät vom ersten oder zweiten Typ zu verstehen. Wenn von einem neuen oder neueren Bediengerät oder einem Bediengerät neuer bzw. neuerer Version die Rede ist, so ist hierunter ein Bediengerät mit gegenüber einem alten oder älteren Bediengerät anderer oder neuerer Software zu verstehen. Es versteht sich zudem, dass auch keine Identität der Hardware bestehen muss.

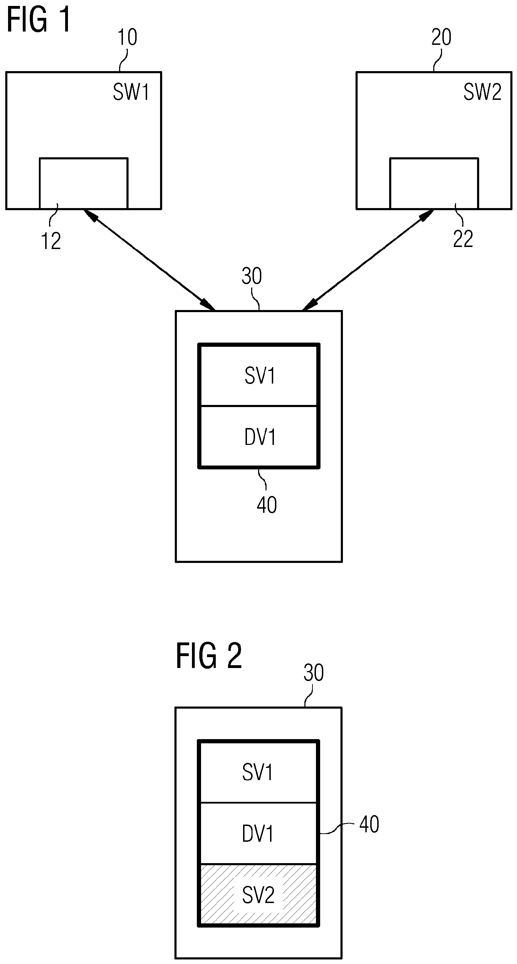

Fig. 1 zeigt in einer stark vereinfachten Darstellung ein erstes und ein zweites Bediengerät 10, 20, welche jeweils ein Lesegerät 12 bzw. 22 zur Aufnahme eines nachfolgend näher beschriebenen Datenträgers 30 aufweisen. Der Datenträger 30 umfasst Steuerdaten 40, mit denen eine nicht dargestellte technische Anlage über das Bediengerät 10, 20, das den Datenträger 30 enthält, bedient, gesteuert und beobachtet werden kann. Während das erste Bediengerät 10 mit einer ersten Software SW1 ausgestattet ist, verfügt das zweite Bediengerät 20 über eine zweite Software SW2, mit gegenüber der ersten Software SW1 geänderter, z.B. neuerer Funktionalität. Die unterschiedlichen Softwarestände des ersten und des zweiten Bediengeräts 10, 20 haben zur Folge, dass die durch den jeweiligen Bediengeräte 10, 20 verarbeitete Datenstruktur der Steuerdaten unterschiedlich ist.

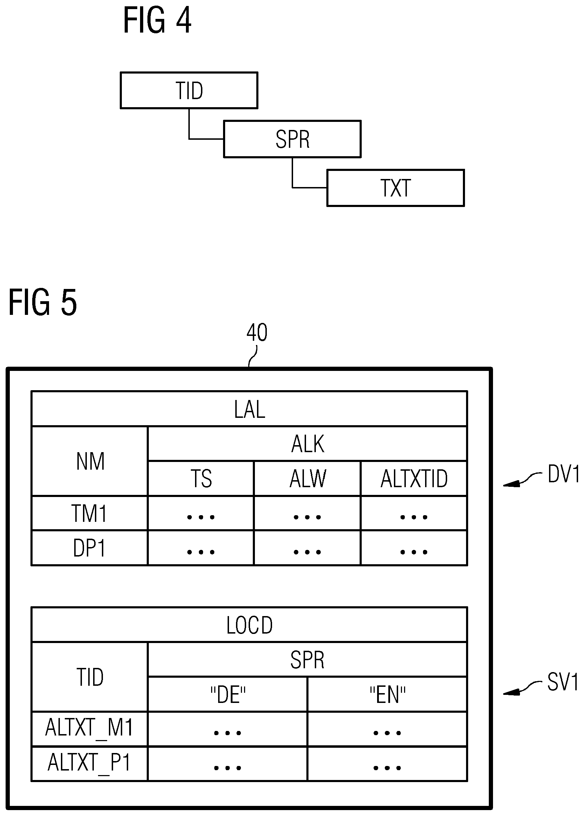

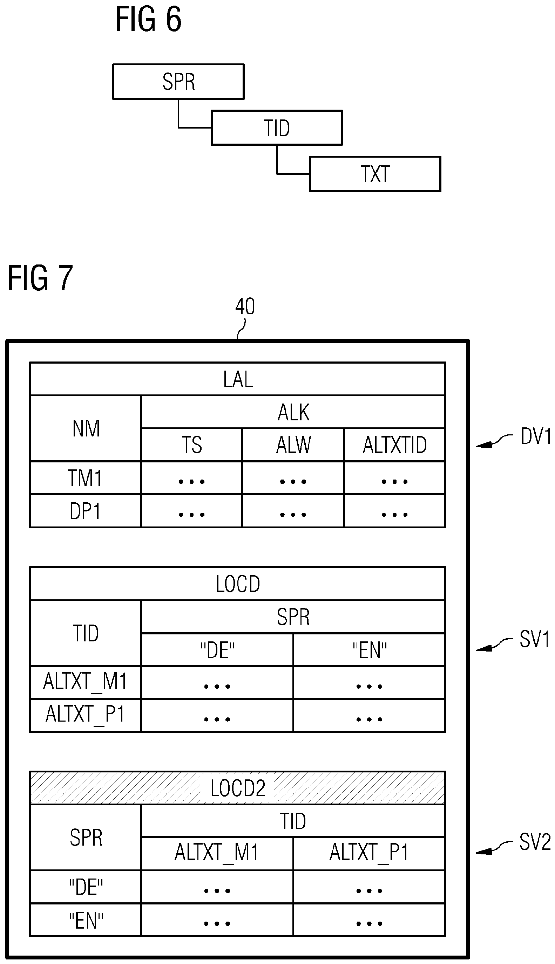

Beispielsweise werden durch das Bediengerät 10 mit der ersten Software SW1 in mehreren Sprachen lokalisierte Texte in einem gemäß Fig. 4 dargestellten Datenformat strukturiert und verarbeitet. Ausgehend von einer Text ID, d.h. einem Textkennzeichner TID, wird zunächst eine Sprache SPR und dann ein Text TXT verarbeitet. Demgegenüber ist die von der zweiten Software SW2 des zweiten Bediengeräts verarbeitete Datenstruktur aus Performancegründen gemäß Fig. 6 strukturiert. Hier werden in Abhängigkeit einer Sprache SPR der Textkennzeichner TID und der Text TXT verarbeitet. Dies hat zur Folge, dass die auf dem Datenträger 30 in Fig. 1 enthaltenen Steuerdaten 40 für die Verarbeitung durch die unterschiedlichen Steuergeräte 10, 20 in unterschiedlicher Form vorliegen müssen.

In der in Fig. 1 gezeigten Ausgangssituation liegen die Steuerdaten 40 in einem durch das erste Steuergerät 10 unmittelbar verarbeitbaren ersten Format vor. Unter einer unmittelbaren Verarbeitung von Daten wird eine Verarbeitung ohne weiteren Zwischenschritt, wie z.B. eine Konvertierung und dergleichen, verstanden. Die Datenstruktur der Steuerdaten ist damit an das erste Bediengerät angepasst. Die Steuerdaten 40 sind in erste Steuerdaten SV1 und zweite Steuerdaten DV1 unterteilt. Der Index "1" signalisiert hierbei, dass es sich um Steuerdaten des ersten Formats handelt.

Obwohl die ersten und zweiten Steuerdaten SV1, DV1 im ersten Format in Fig. 1 als zwei voneinander getrennte Datenblöcke dargestellt sind, so ist dies in der Praxis nicht erforderlich. Eine Unterscheidung der Daten der Steuerdaten 40 in erste oder zweite Steuerdaten SV1, DV1 kann anhand deren Typs erfolgen. All diejenigen Steuerdaten, welche statischer Natur sind und somit nie oder nur selten geändert werden, werden den ersten Steuerdaten SV1 zugeordnet. Demgegenüber werden dynamische, sich schnell veränderliche Daten der Steuerdaten 40, welche während des Verarbeitens durch das erste Bediengerät 10 häufig geändert werden, den zweiten Steuerdaten DV1 zugeschlagen.

Statische Daten, d.h. erste Steuerdaten sind beispielsweise Texte, Bilder, Darstellungen, welche primär der Visualisierung eines Nutzers des Bediengeräts über eine Mensch-Maschine-Schnittstelle dienen. Dynamische Steuerdaten sind hingegen beispielsweise Alarme und/oder (aktuelle oder historische) Prozesswerte, welche während des Betriebs des ersten Bediengeräts 10 häufig veränderbar sind. Anhand ihres unterschiedlichen Typs ist es daher ohne weiteres möglich, die Steuerdaten den ersten oder den zweiten Steuerdaten SV1 oder DV1 zuzuordnen. Ein Umspeichern in entsprechende Datenblöcke ist nicht erforderlich.

Im Falle eines Defekts des ersten Bediengeräts 10 kann der Datenträger 30 aus dem Lesegerät 12 des ersten Bediengeräts 10 entnommen und in das Lesegerät 22 des zweiten Bediengeräts 20 eingeführt werden. Aufgrund des gegenüber der ersten Software SW1 geänderten Softwarestands SW2 ist eine unmittelbare Verarbeitung der ersten und zweiten Steuerdaten SV1, DV1 entweder nicht möglich oder mit hohen Performanceverlusten verbunden. Um die Verarbeitung der Steuerdaten 40 mit höherer Performanz zu ermöglichen, gleichzeitig aber auch eine Rückwärtskompatibilität der Steuerdaten 40 zu der ersten Software SW1 sicherzustellen, werden die ersten Steuerdaten SV1 im ersten Format durch das zweite Bediengerät 20 in ein zweites Format SV2 gewandelt, so dass die ersten Steuerdaten SV2 im zweiten Format unmittelbar durch das zweite Bediengerät 20 gelesen und/oder geschrieben werden können.

Bei der Wandlung werden hierbei die ersten Steuerdaten SV1 im ersten Format nicht überschrieben, sondern die gewandelten ersten Steuerdaten SV2 werden zusätzlich durch das zweite Bediengerät 20 auf dem Datenträger 30 gespeichert. Die Wandlung der ersten Steuerdaten SV1 im ersten Format kann beispielsweise nach dem ersten Auslesen der auf dem Datenträger 30 befindlichen ersten Steuerdaten SV1 erfolgen. Die nach dem Wandlungsvorgang sich ergebende Datenstruktur ist in Fig. 2 dargestellt. Hier ist ohne weiteres erkennbar, dass zusätzlich zu den ersten Steuerdaten SV1 im ersten Format und den zweiten Steuerdaten DV1 im ersten Format die gewandelten ersten Steuerdaten SV2 im zweiten Format enthalten sind. Der Index "2" gibt hierbei das Vorliegen der ersten Steuerdaten SV im zweiten Format an. Zusätzlich sind diese Daten schraffiert dargestellt.

Der Vorteil dieses Vorgehens besteht darin, dass die zweite Software SW2 des zweiten Bediengeräts für den Zugriff auf die ersten Steuerdaten SV2 ausschließlich die Arbeitskopie der Daten im neuen Format verwenden kann. Durch die Möglichkeit die ersten Steuerdaten SV2 unmittelbar zu verarbeiten, kann die Performanz des zweiten Bediengeräts hochgehalten werden. Da die ersten Steuerdaten überwiegend Daten statischer Art umfassen, müssen auch selten Modifikationen an den ersten Steuerdaten vorgenommen werden, was der Performanz ebenfalls zu Gute kommt. Demgegenüber ist die zweite Software SW2 dazu ausgebildet, die dynamischen, sich schnell veränderlichen zweiten Steuerdaten DV1 durch entsprechende Konversion in ein durch die zweite Software SW2 verarbeitbares Format zu verarbeiten. Dies bedeutet, jeder Lese- und Schreibzugriff ist mit einer Konversion verbunden.

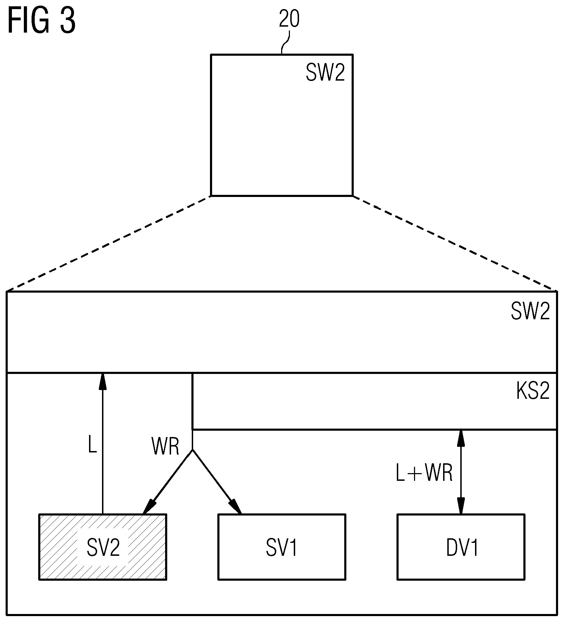

Die Arbeitsweise des zweiten Bediengeräts 20 mit der zweiten Software SW2 ist schematisch nochmals in Fig. 3 dargestellt. In der zweiten Software SW2 ist eine Konversionsschicht KS2 enthalten oder zusätzlich zur zweiten Software SW2 enthalten. Die Konversionsschicht KS2 dient dazu, Lese- und Schreibvorgänge (L+WR) auf die zweiten Steuerdaten DV1 des Datenträgers 30 zu ermöglichen. Hierbei wird eine Konversion des Datenformats der zweiten Steuerdaten DV1 auf dem Datenträger 30 in ein durch die Software SW2 genutztes Datenformat, und umgekehrt, vorgenommen. Werden demgegenüber erste Steuerdaten verarbeitet, so kann unmittelbar lesend auf die gewandelten ersten Steuerdaten SV2 zugegriffen werden. Für die wenigen Fälle, in denen die ersten Steuerdaten durch die zweite Software SW2 des zweiten Bediengeräts 20 modifiziert werden müssen, erfolgt eine Modifikation sowohl der gewandelten ersten Steuerdaten SV2 als auch der durch das erste Bediengerät genutzten nicht gewandelten ersten Steuerdaten SV1. Der Schreibvorgang in die gewandelten ersten Steuerdaten SV2 kann hierbei unmittelbar, d.h. ohne Konversion erfolgen. Der Schreibvorgang, welcher die ersten Steuerdaten SV1 des ersten Formats betrifft, wird dagegen durch die Konversionsschicht KS2 unter Vornahme einer entsprechenden Konversion vorgenommen.

Fig. 5 zeigt auf dem Datenträger enthaltene erste Steuerdaten SV1 und zweite Steuerdaten DV1, welche unmittelbar durch das erste Bediengerät verarbeitet werden können. In den dynamischen, zweiten Steuerdaten DV1 werden die zuletzt erfassten Alarme LAL gespeichert. NM kennzeichnet den Namen der technischen Einheit TM1, DP1, für den ein Alarm gespeichert wurde. ALK repräsentiert einen Alarmkennwert, der sich aus einem Zeitstempel TS, einem Alarmbegleitwert ALW und einem Alarmtextkennzeichner ALTXTID zusammensetzt. Die Alarme treten unvorhersehbar auf und stellen daher zweite Steuerdaten DV1 dar.

Demgegenüber werden Lokalisierungsdaten LOCD als statische Daten betrachtet und sind daher den ersten Steuerdaten SV1 zuzurechnen. In Fig. 5 sind die ersten Steuerdaten SV1 im ersten Format gemäß Fig. 4 gespeichert. TID kennzeichnet einen Textkennzeichner, z.B. ALTXT_M1 und ALTXT_P1. Unter der Spalte SPR sind die verfügbaren Sprachen (hier: "DE" und "EN" mit den jeweiligen Alarmtexten enthalten, wie z.B. "Temperatur am Motor 1 zu hoch" bzw. "Temperature at motor 1 too high" usw.

Fig. 7 zeigt ein mögliches Ausführungsbeispiel der Steuerdaten 40, nachdem die ersten Steuerdaten SV1 im ersten Format in das durch das zweite Bediengerät 20 verarbeitbare zweite Format SV2 gewandelt wurden. Die den ersten Steuerdaten SV1 und den zweiten Steuerdaten DV1 zugeordneten Tabellen entsprechen den in Fig. 5 dargestellten Daten. Zusätzlich sind die in das zweite Format gewandelten ersten Steuerdaten SV2 dargestellt. Die Lokalisierungsdaten der ersten Steuerdaten im zweiten Format SV2 sind mit LOC2 überschrieben. Gemäß der in Fig. 6 dargestellten Struktur erfolgt eine Anordnung der Lokalisierungsdaten anhand der Sprache SPR, wobei beispielhaft die Sprachen "DE" und "EN" dargestellt sind. Jeder Sprache ist ein Textkennzeichner TID zugeordnet. Der Textkennzeichner umfasst wiederum die Alarmtexte für unterschiedliche Komponenten der technischen Anlage, hier ALTXT_M1 und ALTXT_P1.

Die zweite Software SW2 des zweiten Bediengeräts 20 nutzt während des Betriebs die Arbeitskopie, d.h. die ersten Steuerdaten SV2 im zweiten Format, so dass ohne Performanzeinbußen die in dieser Tabelle enthaltenen Daten gelesen werden können. Wird der Datenträger, der dann die Datenstruktur gemäß Fig. 7 umfasst, wiederum in das erste Bediengerät 10 eingesteckt, so werden bei einem Zugriff auf die ersten Steuerdaten die Steuerdaten SV1 im ersten Format verarbeitet.

### Bezugszeichenliste

- 10: erstes Bediengerät
- 12: Lesegerät des ersten Bediengeräts
- 20: zweites Bediengerät
- 22: Lesegerät des drittes Bediengeräts
- 30: Datenträger
- 40: Steuerdaten
- SV1: erste Steuerdaten im ersten Format
- DV1: zweite Steuerdaten im ersten Format
- SV2: erste Steuerdaten im zweiten Format
- SW1: erste Software des ersten Bediengeräts
- SW2: zweite Software des zweiten Bediengeräts
- KS2: Konversionsschicht des zweiten Bediengeräts
- L: Lesezugriff
- WR: Schreibzugriff
- TID: Text ID
- SPR: Sprache
- TXT: Text
- LAL: Letzte Alarme
- NM: Name
- ALK: Alarmkennwert
- TS: Zeitstempel
- ALW: Alarmbegleitwert
- ALTXTID: Alarmtext ID
- TM1: Temperatur Motor 1
- PM1: Druck Motor 1
- LOCD: Lokalisierungsdaten der ersten Steuerdaten im ersten Format
- LOCD2: Lokalisierungsdaten der ersten Steuerdaten im zweiten Format
- ALTXT_M1: Alarmtext Motor 1
- ALTXT_P1: Alarmtext Pumpe 1

## Patentansprüche

1. Verfahren zum Betreiben eines ersten oder eines zweiten Bediengeräts (10, 20), welches insbesondere zur Steuerung einer technischen Anlage dient, mit auf einem Datenträger (30) in einem vorgegebenen Format gespeicherten Steuerdaten (40), wobei
- die Steuerdaten (40) auf dem Datenträger (30) in einem ersten Format gespeichert sind, dass diese durch das erste Bediengerät (10) unmittelbar lesend und/oder schreibend verarbeitbar sind,
- die Steuerdaten (40) erste und zweite Steuerdaten (SV1, DV1) umfassen, wobei beim Betrieb des zweiten Bediengeräts (20) die ersten Steuerdaten (SV1) in ein zweites Format gewandelt werden, so dass die gewandelten ersten Steuerdaten (SV2) durch das zweite Bediengerät (20) unmittelbar lesend und/oder schreibend verarbeitbar sind, und die zweiten Steuerdaten (DV1) bei jedem Zugriff zur Laufzeit von dem ersten Format in ein durch das zweite Bediengerät (20) verarbeitbares Format, oder umgekehrt, gewandelt werden, und wobei weiterhin
- die in das zweite Format gewandelten ersten Steuerdaten (SV2) zusätzlich zu den im ersten Format auf dem Datenträger (30) gespeicherten ersten Steuerdaten (SV1) auf dem Datenträger (30) gespeichert werden.

2. Verfahren nach Anspruch 1, bei dem die Wandlung der ersten Steuerdaten (SV1) in das zweite Format einmalig erfolgt.

3. Verfahren nach Anspruch 1 oder 2, bei dem die in das zweite Format gewandelten ersten Steuerdaten (SV2) auf dem Datenträger (30) gespeichert werden.

4. Verfahren nach einem der vorhergehenden Ansprüche, bei dem die in das zweite Format gewandelten ersten Steuerdaten (SV2) in einer anderen Datei oder einen anderen Ordner oder einen anderen Speicherbereich als die in dem ersten Format vorliegenden Steuerdaten (SV1) gespeichert werden.

5. Verfahren nach einem der vorhergehenden Ansprüche, bei dem die ersten Steuerdaten (SV1) durch das zweite Bediengerät (10, 20) gewandelt werden.

6. Verfahren nach einem der vorhergehenden Ansprüche, bei dem die ersten und zweiten Steuerdaten (SV1, DV1) unterschiedlichen Typs sind.

7. Verfahren nach einem der vorhergehenden Ansprüche, bei dem die ersten Steuerdaten (SV1) solche Daten umfassen, auf welche im Betrieb des ersten und des zweiten Bediengeräts (10, 20) überwiegend lesend zugegriffen wird.

8. Verfahren nach einem der vorhergehenden Ansprüche, bei dem die zweiten Steuerdaten (DV1) sich im Betrieb des ersten oder zweiten Steuergeräts (10, 20) dynamisch veränderliche Daten umfassen.

9. Verfahren nach einem der vorhergehenden Ansprüche, bei dem ein Schreibzugriff auf die ersten Steuerdaten ein Schreiben der in dem ersten und dem zweiten Format vorliegenden ersten Steuerdaten (SV1, SV2) umfasst, wobei die im zweiten Format vorliegenden ersten Steuerdaten (SV2) direkt und die im ersten Format vorliegenden ersten Steuerdaten (SV1) nach Durchführung einer Konversion von dem durch das zweite Bediengerät (20) verarbeitbaren Format in das erste Format geschrieben werden.

## Claims

1. Method for operating a first or a second control device (10, 20) which serves in particular for controlling a technical installation, with control data (40) stored on a data medium (30) in a predetermined format, wherein
- the control data (40) is stored on the data medium (30) in a first format, i.e. is able to be processed for direct reading and/or writing by the first control device (10),
- the control data (40) comprises first and second control data (SV1, DV1), wherein during operation of the second control device (20) the first control data (SV1) is converted into a second format, so that the converted first control data (SV2) is able to be processed directly by the second control device (20) for reading and/or writing, and the second control data (DV1), for each access at run time, is converted from the first format into a format able to be processed by the second control device (20) or vice versa, and wherein furthermore
- the first control data (SV2) converted into the second format is stored on the data medium in addition to the first control data (SV1) stored on the data medium (30) in the first format.

2. Method according to claim 1, in which the conversion of the first control data (SV1) into the second format is undertaken once.

3. Method according to claim 1 or 2, in which the first control data (SV2) converted into the second format is stored on the data medium (30).

4. Method according to one of the preceding claims, in which the first control data (SV2) converted into the second format is stored in a different file or a different folder or a different memory area to the control data (SV1) present in the first format.

5. Method according to one of the preceding claims, in which the first control data (SV1) is converted by the second control device (10, 20).

6. Method according to one of the preceding claims, in which the first and second control data (SV1, DV1) are of different types.

7. Method according to one of the preceding claims, in which the first control data (SV1) comprises such data as is predominantly accessed for reading during operation of the first and the second control device (10, 20).

8. Method according to one of the preceding claims, in which the second control data (DV1) comprises data dynamically changeable in the operation of the first or second control device (10, 20).

9. Method according to one of the preceding claims, in which a write access to the first control data comprises writing the first control data (SV1, SV2) present in the first and the second format, wherein the first control data (SV2) present in the second format is written directly and the first control data (SV1) present in the first format is written after carrying out a conversion from the format able to be processed by the second control device (20) into the first format.

## Revendications

1. Procédé d'exploitation d'un premier ou d'un deuxième appareil de commande (10, 20), qui sert en particulier à piloter une installation technique, comprenant des données de pilotage (40) mémorisées en un format prédéfini sur un support de données (30), dans lequel
- les données de pilotage (40) sont mémorisées en un premier format sur le support de données (30) de telle manière que lesdites données peuvent être traitées en lecture et/ou en écriture directement grâce au premier appareil de commande (10),
- les données de pilotage (40) comprennent des premières et deuxièmes données de pilotage (SV1, DV1), dans lequel, lors de l'exploitation du deuxième appareil de commande (20), les premières données de pilotage (SV1) sont converties en un deuxième format, de sorte que les premières données de commande (SV2) converties peuvent être traitées en lecture et/ou en écriture directement grâce au deuxième appareil de pilotage (20), et les deuxièmes données de pilotage (DV1) sont, lors de chaque accès en cours d'exécution, converties à partir du premier format en un format pouvant être traité par le deuxième appareil de commande (20), ou inversement, et dans lequel en outre
- les premières données de pilotage (SV2) converties dans le deuxième format sont mémorisées en plus des premières données de pilotage (SV1) mémorisées dans le premier format sur le support de données (30).

2. Procédé selon la revendication 1, dans lequel la conversion des premières données de pilotage (SV1) dans le deuxième format intervient une seule fois.

3. Procédé selon la revendication 1 ou 2, dans lequel les premières données de pilotage (SV2) converties dans le deuxième format sont mémorisées sur le support de données (30) .

4. Procédé selon l'une quelconque des revendications précédentes, dans lequel les premières données de pilotage (SV2) converties dans le deuxième format sont mémorisées dans un autre fichier ou un autre dossier ou un autre secteur de mémorisation que les données de pilotage (SV1) présentes dans le premier format.

5. Procédé selon l'une quelconque des revendications précédentes, dans lequel les premières données de pilotage (SV1) sont converties grâce au deuxième appareil de commande (10, 20).

6. Procédé selon l'une quelconque des revendications précédentes, dans lequel les premières et deuxièmes données de pilotage (SV1, DV1) sont de différents types.

7. Procédé selon l'une quelconque des revendications précédentes, dans lequel les premières données de pilotage (SV1) comprennent des données auxquelles l'accès se fait principalement en lecture lors de l'exploitation des premier et deuxième appareils de commande (10, 20).

8. Procédé selon l'une quelconque des revendications précédentes, dans lequel les deuxièmes données de pilotage (DV1) se composent de données dynamiquement variables lors de l'exploitation du premier ou du deuxième appareil de commande (10, 20).

9. Procédé selon l'une quelconque des revendications précédentes, dans lequel un accès en écriture aux premières données de pilotage comprend une écriture des premières données de pilotage (SV1, SV2) présentes dans les premier et deuxième formats, dans lequel les premières données de pilotage (SV2) présentes dans le deuxième format sont écrites directement dans le premier format et les premières données de pilotage (SV1) présentes dans le premier format sont écrites dans le premier format après mise en oeuvre d'une conversion du format pouvant être traité grâce au deuxième appareil de commande (20).
